# EUROPEAN PATENT APPLICATION

(11) **EP 4 740 733 A1**
(43) Date of publication of application: **13.05.2026**
(21) Application number: 24212464.2
(22) Date of filing: 12.11.2024
(51) Int. Cl.: A01N 25/00, A01N 41/10, A01N 43/70, A01N 57/20, A01P 13/00, A01P 21/00, C05B 7/00, C05C 3/00, C05G 3/50

(54) **COMPOSITIONS OF ADJUVANTS AND COSOLVENTS FOR IMPROVING PENETRATION OF HERBICIDES AND/OR FERTILISERS THROUGH SURFACES OF ABOVEGROUND PARTS OF PLANT ORGANS.**

(71) Applicant: Uniwersystet Slaski w Katowicach, 40-007 Katowice (PL)
(72) Inventor: Kapkowski, Maciej, 42-470 Zelislawice (PL); Ludynia, Michal, 42-202 Czestochowa (PL); Sierka, Edyta, 41-215 Sosnowiec (PL); Szwajczak, Ewa, 44-122 Gliwice (PL); Marzec, Marek, 40-669 Katowice (PL)
(74) Representative: Kondrat, Mariusz

(57) **Abstract**

The object of the invention is a composition of adjuvants and cosolvents for improving penetration of artificial fertilisers and/or herbicides through surfaces of aboveground parts of plant organs, characterized in that it is an aqueous solution of a mixture of one to three adjuvants with a cosolvent and an artificial fertilizer and/or herbicide. The composition is used in the cultivation of herbaceous plants of the Poaceae family: maize (*Zea mays*) or barley (*Hordeum vulgare*) and/or in the cultivation of ornamental plants of the cypress family: northern white-cedar (*Thuja occidentalis*)*.* The composition is used for the control of weeds, preferably monocotyledonous and/or from Poaceae family, preferably selected from the group hairy crabgrass, couch grass, cockspur grass, bushgrass and/or dicotyledonous and/or of amaranth family, preferably white goosefoot and/or Asteraceae family, preferably selected from the group comprising sea mayweed, European goldenrod and/or of nightshade family, preferably black nightshade.

## Description

The invention relates to compositions of adjuvants and cosolvents for improving the penetration of herbicides and/or fertilisers through surfaces of aboveground parts of plant organs.

Use of organic substances characterised by adjuvant or modifying effect on the physicochemical properties of biologically active substance is an idea known since the 1950s and perfected in the 1980s. New generations of adjuvants may comprise surfactants, vegetable or mineral oils with emulsifiers and simple inorganic salts. An adjuvant should dissolve biologically active substances well, penetrate biological membranes and be harmless and metabolised quickly. The use of an adjuvant is limited by the structure of the active substance, the mass of which should not exceed 500 g/mol, the log *P* (lipophilicity) should be between a value of 1 and 3, and the melting point should not exceed 200°C. In addition, a good adjuvant should not form microplastics when applied to plant surfaces. The essential role of adjuvants is to prevent drift of liquids from the leaf surface, to ensure better adhesion to the leaf surface, to reduce surface tension and to accelerate the absorption of biologically active substances. The ideal adjuvant should combine all of the above features. Currently, more than 350 chemical substances (chemical penetration enhancers (CPEs) enhancing penetration through biological membranes are known. Various groups of adjuvants have been classified according to their chemical structure: sulfoxides and their derivatives, alcohols and polyols, acyclic and cyclic amides, fatty acids and their esters, amines, amino acids and their derivatives, terpenes, cyclodextrins, tensides and other organic compounds [J. Jampilek, K. Brychtova, Med Res Rev. 32 (2012) 907-947].

The Polish patent [PL229494] claims an adjuvant for soil-applied agrochemicals comprising plant protection products, biostimulants, artificial fertilisers. The adjuvant contains an emulsifying and wetting component constituting a multi-component mixture of surfactants: ethoxylated coco alkyldimethylamine, ethoxylated castor oil, ethoxylated alkyl amines C₁₆-C₁₆ and polymer-like surfactants such as diethanolamine salts of polyoxyethylated alcohol phosphate C₁₂-C₁₄, linear and branched ethoxylated alcohols C₉-C₉ and sodium salt of succinic acid monoester of ethoxylated nonylphenol. A similar family of inventions based on surfactants includes patents [PL192189; PL234744; WO2004006670A1, US10980228B2] or patent applications [P.433649; P.433649].

The Polish patent [PL239074] describes the use of derivatives of 1,3-dioxolanes as penetrants used in the presence of buffers stabilizing the pH in the range of 3 to 12 (borate or phosphate or ammonium or carbonate or acetate or citrate or lactate or formate or succinate or malonate or bis-tris or ADA or ACES or MOPSO or MOPS or PIPES or BES or TES or HEPES or DIPSO or TAPSO or TEA or POPSO or HEPPSO or TRIS or TAPS or AMPD or PBS or CHES or CAPSO or AMP or CAPS or CABS). The compositions preferentially raised the functional properties of: auxins (natural or artificial), simple inorganic salts and non-steroidal anti-inflammatory drugs (ibuprofen, naproxen) as stimulants for maize growth. Another Polish patent application [P.443340] describes the use of 1,3-dioxolate derivatives as penetrants in a composition without the addition of stabilising buffers and without the addition of cosolvents in improving the properties of gifosate (RoundUp 360 Plus) in maize cultivation.

The U.S. patent US10259753B2 discloses an organic composition for agricultural use comprising a nutrient source and a phosphopeptide comprising a complexation product of: an organic acid, a biocomplexing agent and a phosphorus source. A typical composition for agricultural use comprises: nutrient source nitrogen, phosphorus, potassium in an amount of 2-45%; complexing agents in an amount of 5-35%; peptides in an amount of 5-30%; phosphopeptides in an amount of 5-15%; carbohydrate source in an amount of 3-10%; trace minerals in an amount of 0.5-3%; vitamins in an amount of 0.1-2.0%; pH indicator in an amount of 0.2-3%; humectant in an amount of 0.1-2%; surfactants in an amount of 3-10%; anti-foaming agents in an amount of 0.2-1%; penetrating agents in an amount of 1-5% and thickeners/stabilisers in an amount of 0.05-0.1%. The following were listed as penetrating agents: alcohols, pine extracts, natural oils and petroleum oils.

Patent description of US4155745A discloses the use of 2-(chloroacetylamino)methyl-1,3-dioxolate derivatives with R and R₁ functional groups being independently of each other: alkyl or fluoroalkyl groups containing 1 to 4 carbon atoms; a phenyl substituent or a hydrogen atom, as herbicides. Applications of the herbicide included the control of weeds such as Hairy Crabgrass (*Digitaria sanguinalis*), Pearl millet (*Setaria glauca*), Cockspur grass (*Echinochloa crusgalli*), California Oats (*Avena sativa*), Redroot pigweed (*Amaranthus retroflexus*), Indian Mustard (*Brassica juncea*) and Curly Dock (*Rumex crispus*). The compounds according to this invention are used as pre-emergence and post-emergence herbicides in herbicide compositions with adjuvants and carriers used to facilitate the dispersion of the active ingredients (sand, fuller's earth, bentonite clays, vermiculite, perlite). The herbicide composition is most often in the form of granules of relatively large particle size, wettable powders, concentrates for emulsification or as solutions. Also used as adjuvants in this composition are wetting agents, dispersing agents or emulsifiers; oils such as heavy aromatic naphthas, paraffin or other petroleum fractions or vegetable oils; and/or binders such as dextrins, glue or synthetic resins. Adjuvants mentioned in the description of the invention are wetting, dispersing or emulsifying agents customarily used in agricultural preparations, e.g. alkyl and alkylaryl sulfonates and sulphates and their sodium salts; polyhydric alcohols; and other types of commercially available surfactants. The adjuvant, which is also a surfactant, is used in concentrations ranging from 0.1-15 %wt. of the herbicide composition. The phytotoxic compositions according to this invention can also be used with an adjuvant and contain other additives, for example fertilisers, pesticides, etc.

One group of substances characterised by tissue-penetrating activity are compounds with dioxolane (preferably 1,3-dioxacyclopentanes) and dioxane (preferably 1,3-dioxacyclohexanes) leading structures with different side chains. For example, the best known penetrant from this group is SEPA (2-Nonyl-1,3-dioxolane) representing a class of compounds containing different substituents for the leading structure of 1,3-dioxolane, where the substituent R comprises alkyl groups C₄-C₁₈ particularly preferably C₆-C₆. The range of applications for these groups of compounds includes enhancing the absorption of therapeutic agents through the skin of humans and animals. Hydrophilic or hydrophobic hydrogels are envisaged as carriers for the compositions of pharmaceutical substances and adjuvants. The active substances described in the examples of the invention were progesterone, indomethacin and caffeine [US4861764A]. The high level of safety of these compounds is associated with low toxicity to the Central Nervous System (CNS), mild metabolism, easy excretion and lack of other adverse pharmacological activities. These safety properties are the reason for its classification as a *'soft enhancer'* [K.A. Walters, Dermatological and Transdermal Formulations, Marcel Dekker, inc. 2002, New York].

To summarise the review of the state of the art so far, most of the known solutions did not reveal that low-molecular-weight cyclic ketals with a leading structure of 1,3-dioxolane (molar masses below 300 g/mol) in composition with cosolvents have particularly good properties to improve penetration into plant organs. The patent literature only described that compositions of macromolecular organic compounds (molar masses above 500 g/mol) with the addition of active substances and several excipients (emulsifiers, preservatives, antioxidants, stabilisers) had beneficial effects in terms of penetration into animal and plant tissues. Most solutions included the use of biologically active substances, excipients and adjuvants in the form of water-soluble granules, powders or emulsions in the presence of pH-stabilising buffers. In the solutions referred to, the effect of penetration of plant or animal tissues may also be the result of an additive synergistic interaction between adjuvants, active substances and excipients. Some adjuvants, which are macromolecular organic compounds, can form microplastics in the compositions due to the reactivity of the functional groups in the presence of the biologically active substance. This results in accumulation of the biologically active substance in plant organs and soil contamination in addition to the intended effect.

The aim of the inventors of the present invention was to develop compositions of adjuvants and cosolvents that are water-soluble without the need for additional auxiliary substances (emulsifiers, pH-stabilising buffers), readily biodegradable and non-toxic, applied directly to the above-ground organs of plants, containing biologically active substances (metal chelates and/or NPK compound fertilisers and/or herbicides) in order to enhance their action and reduce their effective doses needed to achieve effects identical to those of the doses originally provided by the manufacturer.

The essence of the invention is a composition of adjuvants and cosolvents for improving penetration of artificial fertilisers and/or herbicides through surfaces of aboveground parts of plant organs, **characterised in that** it comprises an aqueous solution of a mixture of one to three adjuvants with a cosolvent and an artificial fertiliser and/or herbicide, wherein:
- the adjuvant is a low-molecular-weight cyclic ketal with 1,3-dioxolane leading structure of general formula 1, wherein individual substituents R¹, R², R³, R⁴ denote independently a hydrogen atom (-H) or a hydroxymethyl group (-CH₂ OH) or an alkyl group (C₁-C₃),
- the artificial fertiliser is a NPK compound fertiliser composed of:
   (N-NO₃ - 2.5%, N-NH₄ - 2.5%, N-NH₂ - 13.0%) - (N) - 18%; (MgO) - 3.5%; (S) - 2.7%; (B) - 0.2%; (MgO) - 3.5%; (Cu) - 1.5%; (Fe) - 0.5%; (Mn) - 3.0%; (Mo) - 0.01%; (Zn) - 0.5% enriched with MgSO₄ as: (MgO) - 16%; (SO₃) - 32.5%;
   or a fertiliser with metal chelates composed of:
      (N-NO₃ - 4.9%, N-NO₄ - 3.3%, N - 9.8%) - (N) - 18%; (P₂O₅) - 18%; (K₂O) - 18%; (MgO) - 3%; (SO₃) - 5%; (B) - 0.025%; (Fe) EDTA/DTPA - 0.7%; (Mn) EDTA - 0.04% (Zn) EDTA - 0.025%; (Cu) - 0.01%; (Mo) - 0.004%;
      or:
         (4.4% N-NO₃; 8.6% N-NH₄) - (N) - 13%; (P₂O₅) - 40%; (K₂O) - 13%; (Fe) EDTA/DTPA - 0.07%; (Mn) EDTA - 0.04%; (Zn) EDTA - 0.025%; (Cu) EDTA - 0.01%; (B) - 0.025%; (Mo) - 0.004%;
            or:
            N-NO₃ - 5%, N-NH₄ - 3.5%, N-NH₂ - 9.5%) - (N) - 18%; (P₂O₅) - 18%; (K₂O) - 18%; (MgO) - 2%; (SO₃) - 6%; (B) - 0.02%; (Cu) EDTA - 0.05%; (Fe) EDTA - 0.05%; (Mn) EDTA - 0.01%; (Mo) - 0.001%; (Zn) EDTA - 0.03%;
            or:
               (101.1 g/L KNO₃) - 6.0 mL; (236.16 g/L Ca(NO₃)₂ •4H₂O) - 4.0 mL; (115.08 g/L NH₄H₂PO₄) - 2.0 mL; (246.49 g/L MgSO₄ •7H₂O) - 1.0 mL; (1.864 g/L KCl) - 2.0 mL; (0.773 g/L H₃BO₃) - 2.0 mL; (0.169 g/L MnSO₄ •H₂O) - 2.0 mL; (0.288 g/L ZnSO₄ •7H₂O) - 2.0 mL; (0.062 g/L CuSO₄ •5H₂O) - 2.0 mL; (0.04 g/L H₂ MoO₄ •H₂O) - 2.0 mL; (30.0 g/L NaFeDTPA) - 1.0 mL,
- herbicide is:
   glyphosate (2-(phosphonomethylamino)acetic acid)
   or
   terbuthylazine (2-*N*-tert-butyl-6-chloro-4-*N*-ethyl-1,3,5-triazine-2,4-diamine) and/or metolachlor (2-chloro-*N-*(2-ethyl-6-methylphenyl)-*N*-[(1*S*)-2-methoxy-1-methylethyl]acetamide) and/or mesotrione (2-(4-(methylolsulfonyl)-2-nitrobenzoyl)cyclohexane-1,3-dione)
- concentration of the adjuvant content ranges from 0.75 to 4.0 %vol. relative to the total volume of the composition, preferably up to 2.0 %vol,
- concentration of the cosolvent content ranges from 0.25 to 4.0 % vol. relative to the total volume of the composition, preferably up to 2.0 % vol,
- concentration of the glyphosate content is up to 400 mg/L in relation to the total volume of the composition, preferably between 200 and 400 mg/L,
- concentration of the terbuthylazine content is between 92.4 and 250 g/L in relation to the total volume of the composition, preferably between 100 and 250 g/L,
- concentration of the metolachlor content is up to 154 g/L in relation to the total volume of the composition, preferably between 100 and 154 g/L,
- concentration of the mesotrione content is between 18.5 and 50 g/L in relation to the total volume of the composition, preferably between 20 and 50 g/L,
- concentration of the NPK fertiliser content, relative to the total volume of the composition, ranges from 3.0 to 10.0 g/L,
- concentration of the fertiliser with metal chelates ranges from 0.5 to 1.0 g/L in relation to the total volume of the composition.

Advantageously, the alkyl group is a methyl group (-CH₃).

Advantageously, the cosolvent is acetone (propan-2-one) or ethyl alcohol (ethanol).

Advantageously, the composition is used for the cultivation of plants, advantageously monocotyledons.

Advantageously, the composition is used in the cultivation of cereal crops of Poaceae family: maize (*Zea mays)* or barley (*Hordeum vulgare*)*.*

Advantageously, the composition is used in the cultivation of ornamental plants of cypress family: northern white-cedar (*Thuja occidentalis*).

Advantageously, the composition is used to control weeds, beneficially monocotyledons.

Advantageously, the composition is used for the control of weeds of the Poaceae family, preferably selected from the group of hairy crabgrass, couch grass, cockspur grass, bushgrass.

Advantageously, the composition is used to control weeds, preferably dicotyledons. Advantageously, the composition is used in the control of weeds of amaranth family, preferably white goosefoot.

Advantageously, the composition is used in the control of weeds of Asteraceae family, preferably selected from the group of comprising sea mayweed, European goldenrod.

Advantageously, the composition is used in the control of weeds of nightshade family, preferably black nightshade.

The idea of the invention is to use lower than standard concentrations of the biologically active substance (metal chelates and/or NPK compound fertilisers and/or herbicides). The end result of the using the composition according to the invention is an increased penetration of artificial fertilisers into plant organs, consequently leading to an enhancement of their effect and a reduction in the need for their excessive use. The invention is part of a pro-ecological trend involving the reduction of the use of chemical compounds that are plant growth promoters or inhibitors, contributing to the reduction of their amount in the environment. Due to the low reactivity of the alkyl groups, low-molecular cyclic ketals with a 1,3-dioxolane leading structure have a limited ability to react with the biologically active substance and do not accumulate in the plant. In addition, the above-mentioned derivatives with a 1,3-dioxolane leading structure do not form microplastics, enabling their safe use in stimulating the development of useful plants. The invention is further distinguished by the simultaneous use, alongside the adjuvant, of cosolvents constituting aprotic (acetone) or protic (ethanol) polar solvents. In particular, the latter is capable of solvating 1,3-dioxolate derivatives and forming hydrogen bonds, resulting in an enhanced synergistic effect of the adjuvant and the artificial fertiliser. The role of aprotic polar solvents in the composition, depending on the presence of functional groups in the metal chelates and/or herbicides used, is to increase their solubility in the composition and thus bioavailability.

The problem with solutions known from the state of the art, including those cited above, is the long biotransformation time and the possibility of accumulation of penetration enhancers in plant cells. In contrast, the low-molecular-weight cyclic ketals used in the composition according to the present invention with the leading structure of 1,3-dioxolane undergo rapid decomposition and incorporation into plant metabolic pathways. The applied cosolvents enhance the penetration of fertilisers and/or herbicides through the above-ground parts of plants. In addition, the above-mentioned cosolvents are non-toxic and rapidly evaporate from the surface of plant organs. The incorporation of the adjuvant into metabolic pathways is particularly beneficial with regard to plant cells, which receive an additional portion of simple organic compounds that accelerate their growth and development. Another advantage of the invention - compared to the prior art solutions - is the lower lipophilicity and higher affinity of the low molecular weight cyclic ketals for biological walls and membranes with respect to long hydrocarbon chain structures. The consequence of this condition is an increased penetration of low-molecular-weight 1,3-dioxolanes into plant organs. In addition, low-molecular-weight 1,3-dioxolanes and cosolvents can be used in lower concentrations as actual solutions, which facilitates their application to the surface of external plant organs in the form of aerosols. In contrast to published solutions, macromolecular 1,3-dioxolanes such as SEPA require emulsifiers. Furthermore, none of the prior art solutions known so far describes the use of adjuvants in compositions in water in the presence of cosolvents and without the use of excipients, which are mainly emulsifiers, preservatives, antioxidants and stabilisers.

In the composition according to the present invention, 1 to 3 cyclic ketals with concentrations up to 4.0 %vol. are used in the fertilizer composition with derivatives of cyclic ketals with a leading structure of 1,3-dioxolane together with cosolvents. The use of concentrations of cyclic ketals in water with concentrations above 4.0 %vol. is not economically justified and results in the stratification of the solutions into two organic and inorganic phases. Moreover, the compositions claimed are prepared immediately before application to the surface of aboveground plant organs from a base containing water with a favourable content of selected cyclic ketals and cosolvents, followed by the addition of a biologically active substance (metal chelates and/or NPK multicomponent fertilisers). In the composition according to the present invention, there is therefore no need for preservatives or auxiliary substances, which simplifies the use of the composition. It also seems unobvious to use and predict the effect of compositions of low molecular weight 1,3-dioxolanes together with cosolvents as substances enhancing or weakening the effect of biologically active substances (metal chelates and/or multicomponent NPK fertilisers), despite the description of compounds with a 1,3-dioxolane leading structure in the literature.

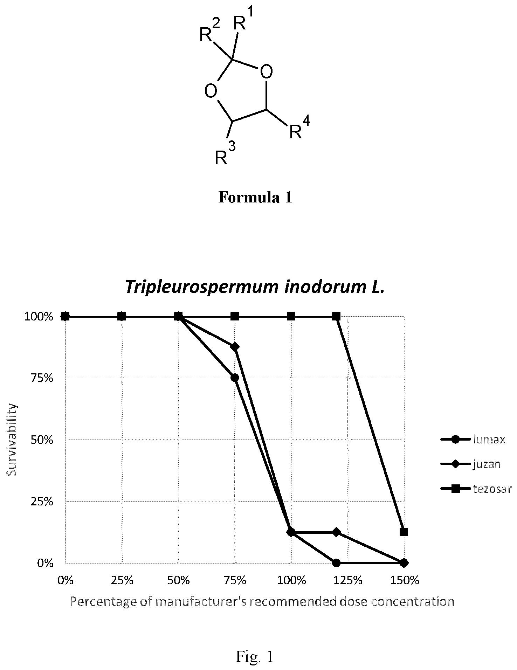

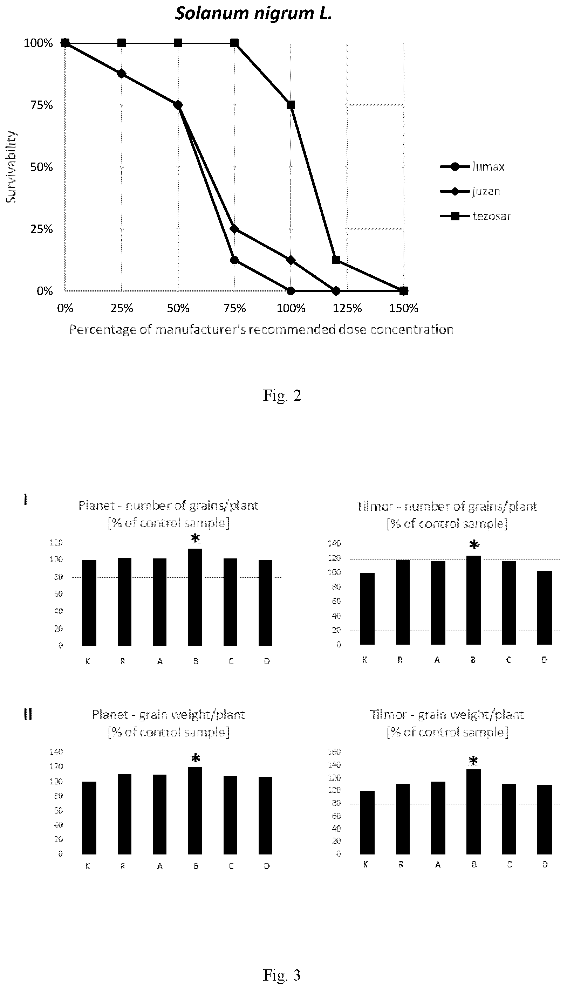

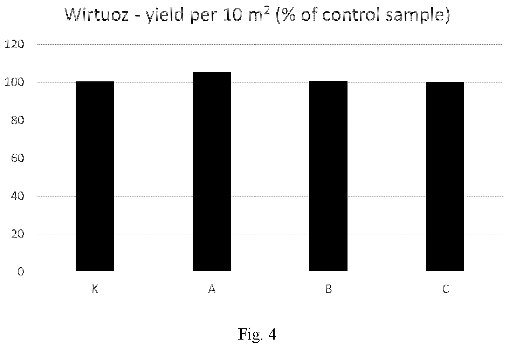

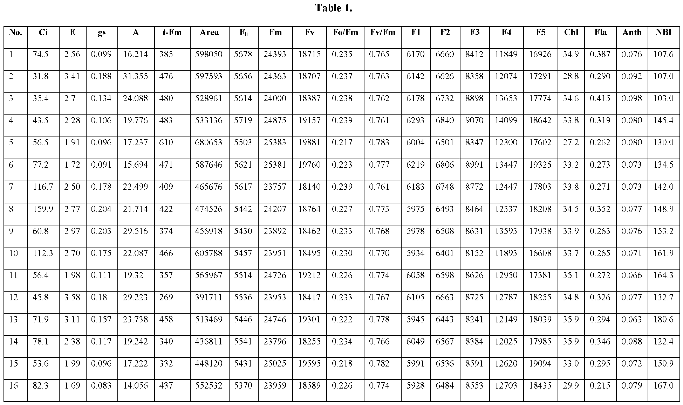

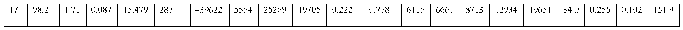

The solution according to the invention is shown in more detail in **examples 1-19** and in Figs. **1-4** and **Table 1.** The figures show respectively: **Fig. 1** - survival rate of scentless mayweed (*Tripleurospermum inodorum* L.) after 14 days as a function of concentration for Lumax 537.5 SE; Juzan 100 SC; Tezosar 500 SC without addition of 1,3-dioxolate derivatives and cosolvent, **Fig. 2** - survival of black nightshade *(Solanum nigrum* L.) after 14 days as a function of concentration for Lumax 537.5 SE; Juzan 100 SC; Tezosar 500 SC without the addition of 1,3-dioxolate derivatives and cosolvent,, **Fig. 3** - results of the greenhouse experiment for two barley varieties (Tilmor and Planet) without cosolvents in the composition, I - effect of the composition treatment on the number of grains produced by a single plant and II - effect of the composition treatment on the weight of grains produced by a single plant, results in both cases are expressed as a percentage of the control sample, wherein: K - control plants sprayed with foliar fertiliser, R - reference plants sprayed with foliar fertiliser with the addition of 1 %vol. DGDE, A - plants sprayed with foliar fertiliser with the addition of 1 %vol. DIOX, B - plants sprayed with foliar fertiliser supplemented with 1 %vol. TMD, C - plants sprayed with foliar fertiliser with the addition of 1 %vol. DMD, D - plants sprayed with foliar fertiliser supplemented with 1 %vol. DDM, * denotes a statistically significant difference between the tested composition and the control sample (N=7, Student's t-test (p<0.05)), and **Fig. 4** - results of a field experiment for barley (Virtuoz cultivar), showing differences in yield obtained from a plot of 10 m² . K - trial control (Cereal Plus (3kg/ha) with MgSO₄ (5 kg/ha)); A, B, C - tested compositions with adjuvants and cosolvents wherein: (A - Cereal Plus (3 kg/ha) with MgSO₄ (5 kg/ha) with 0.75 %vol. DMD with 0.25 %vol. AcMe; B - Cereals Plus (3 kg/ha) with MgSO₄ (5 kg/ha) with 0.75 %vol. TMD with 0.25 %vol. AcMe; C - Cereal Plus (3kg/ha) with MgSO₄ (5 kg/ha) with DDM with 0.25 %vol. AcMe). **Table** 1 summarises the mean values of the parameters determining the physiological status of maize (*Zea mays)* two weeks after agrotechnical treatment. Indications: Ci - Cellular CO₂ concentration [ppm], E - Transpiration [mmol/m² /s], gs - stomatal conductivity of H₂O [mol/m²/s], A - Degree of photosynthesis [µmol/m²/s], t-Fm - time to reach maximum fluorescence, Fm - maximum fluorescence, Area - area over the fluorescence curve, F₀ - null fluorescence, Fv - variable fluorescence, F₀/Fm - ratio of maximum fluorescence to null fluorescence, Fv/Fm - ratio of fluorescence rate to maximum fluorescence, F1-F5 - fluorescence characteristic of maxima in the OJIP test, Chl - chlorophyll content, Fla - flavonoid content, Kar - carotenoid content, NBI - nutrient balance index - nitrogen content.

Acronyms used in **examples 1-19** for adjuvants and cosolvents: DIOX -1,3-dioxolane; DMD - 2,2-dimethyl-1,3-dioxolane; TMD - 2,2,4-trimethyl-1,3-dioxolane; DDM - (2,2-dimethyl-1,3-dioxolane-4-yl)methanol; EtOH - ethanol; AcMe - acetone; DGDE - diethylene glycol diethyl ether.

Acronyms used in **examples 1-19** for active substances in fertilisers: *kristalon green-* (N-NO₃ - 4.9%, N-NO₄ - 3.3%, N - 9.8%) - (N) - 18%; (P₂O₅) - 18%; (K₂O) - 18%; (MgO) - 3%; (SO₃) - 5%; (B) - 0.025%; (Fe) EDTA/DTPA - 0.7%; (Mn) EDTA - 0.04% (Zn) EDTA - 0.025%; (Cu) - 0.01%; (Mo) - 0.004%; *kristalon yellow* - (4.4% N-NO₃ ; 8.6% N-NH₄) - (N) - 13%; (P₂O₅) - 40%; (K₂O) - 13%; (Fe) EDTA/DTPA - 0.07%; (Mn) EDTA - 0.04%; (Zn) EDTA - 0.025%; (Cu) EDTA - 0.01%; (B) - 0.025%; (Mo) - 0.004%; *Cereal Plus with MgSO₄ "Zboze Plus z MgSO₄"* - (N-NO₃ - 2.5%, N-NH₄ - 2.5%, N-NH₂ - 13.0%) - (N) - 18%; (MgO) - 3.5%; (S) - 2.7%; (B) - 0.2%; (MgO) - 3.5%; (Cu) - 1.5%; (Fe) - 0.5%; (Mn) - 3.0%; (Mo) - 0.01%; (Zn) - 0.5% enriched with MgSO₄ as: (MgO) - 16%; (SO₃) - 32.5%; *Cereals 18 plus micro "Zboza 18 plus mikro" -* (N-NO₃ - 5%, N-NH₄ - 3.5%, N-NH₂ - 9.5%) - (N) - 18%; (P₂O₅) - 18%; (K₂O) - 18%; (MgO) - 2%; (SO₃) - 6%; (B) - 0.02%; (Cu) EDTA - 0.05%; (Fe) EDTA - 0.05%; (Mn) EDTA - 0.01%; (Mo) - 0.001%; (Zn) EDTA - 0.03%; *Hoagland's medium* - (101.1 g/L KNO₃) - 6.0 mL; (236.16 g/L Ca(NO₃)₂ •4H₂O) - 4.0 mL; (115.08 g/L NH₄H₂PO₄) - 2.0 mL; (246.49 g/L MgSO₄ •7H₂O)-1.0 mL; (1.864 g/L KCl) - 2.0 mL; (0.773 g/L H₃BO₃) - 2.0 mL; (0.169 g/L MnSO₄ •H₂O) - 2.0 mL; (0.288 g/L ZnSO₄ •7H₂O) - 2.0 mL; (0.062 g/L CuSO₄ •5H₂O) - 2.0 mL; (0.04 g/L H₂ MoO₄ •H₂O) - 2.0 mL; (30.0 g/L NaFeDTPA) - 1.0 mL.

Acronyms used in **examples 1-19** for biologically active compounds in herbicides: *RoundUp 360 Plus* - glyphosate (2-(phosphonomethylamino)acetic acid); *Tezosar 500 SC* - terbuthylazine - (2-*N*-tert-butyl-6-chloro-4-*N*-ethyl-1,3,5-triazine-2,4-diamine); *Juzan 100 SC* - mesotrione (2-(4-(Methylsulfonyl)-2-nitrobenzoyl)cyclohexane-1,3-dione); *Lumax 537.5 SE* - terbuthylazine - (2-*N*-tert-butyl-6-chloro-4-*N*-ethyl-1,3,5-triazine-2,4-diamine) and metolachlor (2-Chloro-N-(2-ethyl-6-methylphenyl)-*N*-[(1*S*)-2-methoxy-1-methylethyl]acetamide) and mesotrione (2-(4-(Methylsulfonyl)-2-nitrobenzoyl)cyclohexane-1,3-dione).

### Example 1 Greenhouse trial with maize with the composition: glyphosate (RoundUp 360 Plus) / 1% vol. DMD / 1% vol. EtOH.

Seeds of maize (*Zea mays L*.) were sown two at a time in 2 L pots. After six weeks, spraying was carried out with the following mixtures:
**K1** - RoundUp 400 mg/L together with 1% DMD by volume
**K2** - RoundUp 200 mg/L together with 1% DMD by volume
**P1** - RoundUp 400 mg/L together with 1% DMD by volume and 1% EtOH
**P2** - RoundUp 200 mg/L together with 1% DMD by volume and 1% EtOH

Survival was assessed one month after the agrotechnical treatment. Mortality rates were found for the trial control: K1 at 65%, K2 at 20%. In analogous trials with the addition of cosolvent, mortality was: P1 at 72% and for P2 at 35%. The addition of cosolvent improves the efficiency of the composition by between 7 and 15%.

### Example 2 Greenhouse trial with scentless mayweed with the composition: terbuthylazine + metolachlor + mesotrione (Lumax 537.5 SE) / 1% vol. DMD / 1% vol. EtOH.

Seeds of the weed scentless mayweed (*Tripleurospermum inodorum* L.) were collected from cultivated fields in the vicinity of Brzeźec near Pszczyna and sown into collective pots. After three weeks, the plants were re-potted three at a time into 2 L pots. One month after sowing, spraying with Lumax 537.5 SE was performed at concentrations ranging from 50-150% of the recommended dose value, which were used to prepare survival curves **(****Fig. 1****).** The 50% dose recommended by the manufacturer (265 g/L), for which the mortality rate was 0%, was selected for comparative studies. A composition was prepared: Lumax (265 g/L) with 1% vol. DMD in the presence of 1% vol. EtOH. The above-described composition was used to spray weeds (10 2-litre pots of 3 plants in each) grown under analogous conditions to those for which the survival curve was determined **(****Fig. 1****).** One month after spraying, a mortality rate was 26.6%. The use of adjuvant and cosolvent in combination with Lumax 537.5 SE at 265 g/L increased the herbicide efficacy by 26.6%.

### Example 3 Greenhouse trial with scentless mayweed with the composition: mesotrione (Juzan 100 SC) / 2% vol. DMD / 2% vol. EtOH.

Seeds of the weed scentless mayweed (*Tripleurospermum inodorum* L.) were collected from cultivated fields in the vicinity of Brzeźec near Pszczyna and sown into collective pots. After three weeks, the plants were re-potted three at a time into 2 L pots. One month after sowing, Juzan 100 SC was sprayed at concentrations ranging from 50-150% of the recommended dose value, which were used to prepare survival curves **(****Fig. 1****).** The 50% dose recommended by the manufacturer (50 g/L), for which the mortality rate was 0%, was selected for comparative studies. A composition was prepared: Juzan 100 SC (50 g/L) with 2% vol. DMD in the presence of 2% vol. EtOH. The above-described composition was used to spray weeds (10 2-litre pots of 3 plants in each) grown under analogous conditions to those for which the survival curve was determined (Fig. 1). One month after spraying, a mortality rate was 20%. The use of adjuvant and cosolvent in combination with Juzan 100 SC at 50 g/L increased the herbicide efficacy by 20%.

### Example 4 Greenhouse trial with scentless mayweed with the composition: terbuthylazine (Tezosar 500 SC) / 3% vol. DMD / 3% vol. EtOH.

Seeds of the weed scentless mayweed (*Tripleurospermum inodorum* L.) were collected from cultivated fields in the vicinity of Brzeźec near Pszczyna and sown into collective pots. After three weeks, the plants were re-potted three at a time into 2 L pots. One month after sowing, Tezosar 500 SC was sprayed at concentrations ranging from 50-150% of the recommended dose, which were used to prepare survival curves **(****Fig. 1****).** The 50% dose recommended by the manufacturer (250 g/L), for which the mortality rate was 0%, was selected for comparative studies. A composition was prepared: Tezosar 500 SC (250 g/L) with 3% vol. DMD in the presence of 3% vol. EtOH. The above-described composition was used to spray weeds (10 2-litre pots of 3 plants in each) grown under analogous conditions to those for which the survival curve was determined **(****Fig. 1****).** One month after spraying, a mortality rate was 16.6%. The use of an adjuvant and cosolvent in combination with Tezosar 500 SC at 250 g/L increased the herbicide efficacy by 16.6%.

### Example 5 Greenhouse trial with black nightshade with the composition: terbuthylazine + metolachlor + mesotrione (Lumax 537.5 SE) / 1% vol. TMD / 1% vol. EtOH.

Seeds of the weed black nightshade *(Solanum nigrum* L.) were collected from fields in the vicinity of Brzeźec near Pszczyna and sown into collective pots. After three weeks, the plants were re-potted three at a time into 2 L pots. One month after sowing, spraying with Lumax 537.5 SE was performed at concentrations ranging from 50-150% of the recommended dose value, which were used to prepare survival curves **(****Fig. 2****).** The 50% dose recommended by the manufacturer (265 g/L), for which the mortality rate was 25%, was selected for comparative studies. A composition was prepared: Lumax 537.5 SE (265 g/L) with 1% vol. TMD in the presence of 1% vol. EtOH. The above-described composition was used to spray weeds (10 2-litre pots of 3 plants in each) grown under analogous conditions to those for which the survival curve was determined **(****Fig. 2****).** One month after spraying, a mortality rate was 73.3%. The use of adjuvant and cosolvent in combination with Lumax 537.5 SE at 265 g/L increased the herbicide efficacy by 48.3%.

### Example 6 Greenhouse trial with black nightshade with the composition: terbuthylazine (Tezosar 500 SC) / 2% vol. DMD / 2% vol. EtOH.

Seeds of the weed black nightshade *(Solanum nigrum* L.) were collected from fields in the vicinity of Brzeźec near Pszczyna and sown into collective pots. After three weeks, the plants were re-potted three at a time into 2 L pots. One month after sowing, Tezosar 500 SC was sprayed at concentrations ranging from 50-150% of the recommended dose, which were used to prepare survival curves **(****Fig. 2****).** The 50% dose recommended by the manufacturer (250 g/L), for which the mortality rate was 0%, was selected for comparative studies. A composition was prepared: Tezosar 500 SC (250 g/L) with 2% vol. DMD in the presence of 2% vol. EtOH. The above-described composition was used to spray weeds (10 2-litre pots of 3 plants in each) grown under analogous conditions to those for which the survival curve was determined **(****Fig. 2****).** One month after spraying, a mortality rate was 23.3%. The use of an adjuvant and cosolvent in combination with Tezosar 500 SC at 250 g/L increased the herbicide efficacy by 23.3%.

### Example 7 Greenhouse trial with black nightshade with the composition: mesotrione (Juzan 100 SC) / 3% vol. DMD / 3% vol. EtOH.

Seeds of the weed black nightshade *(Solanum nigrum* L.) were collected from fields in the vicinity of Brzeźec near Pszczyna and sown into collective pots. After three weeks, the plants were re-potted three at a time into 2 L pots. One month after sowing, Juzan 100 SC was sprayed at concentrations ranging from 50-150% of the recommended dose value, which were used to prepare survival curves **(****Fig. 2****).** The 50% dose recommended by the manufacturer (50 g/L), for which the mortality rate was 25%, was selected for comparative studies. A composition was prepared: Juzan 100 SC (50 g/L) with 3% vol. DMD in the presence of 3% vol. EtOH. The above-described composition was used to spray weeds (10 2-litre pots of 3 plants in each) grown under analogous conditions to those for which the survival curve was determined **(****Fig. 2****).** One month after spraying, a mortality rate was 40%. The use of adjuvant and cosolvent in combination with Juzan 100 SC at 50 g/L increased the herbicide efficacy by 15%.

### Example 8 Maize field trial with the composition: glyphosate (RoundUp 360 Plus) / 2% vol. DMD / 2% vol. EtOH.

Field trials were carried out on experimental plots drawn from arable fields in the vicinity of Brzeźec near Pszczyna (podzolic soil, warm temperate transitional climate). Three variants of the experiment were carried out, in which the maize *Zea mays* L.:
**K1** - was not sprayed (physiological condition of plants **Table 1 lines 1 and 2** combined);
**K2** - was treated with RoundUp at a concentration of 400 mg/L (plant physiological status **Table 1 line 3);**
**P1** - was treated with RoundUp at a concentration of 400 mg/L along with 2% vol. DMD and 2% vol. EtOH (plant physiological status **Table 1 line 4).**

For spraying 1 m², 100 ml of spray liquid was prepared. A comparison of the physiological state of the plants is shown in **Table 1.** The application of the adjuvant in the presence of cosolvent increases the effectiveness of RoundUp, as can be seen from the decrease in photosynthetic efficiency (**Table 1** - parameter A) by 18% compared to K2, transpiration also decreases by 16% **(Table 1** - ci parameter) and stomatal conductance for water by 21% **(Table 1** - gs parameter). The maximum quantum yield of PSII **(Table 1** - Fv/Fm parameter) also decreases by 4%. Phases J and I are also increased by about 3 to 5 % **(Table 1** - F3, F4 parameters), indicating a disruption in the activity of the water-splitting complex. In P1, there was a decrease in chlorophyll content of about 2.5% compared to K2 **(Table 1** - chl parameter), and an increase in flavonoids of about 23% **(Table 1 - fla** parameter) and anthocyanins of about 18% **(Table 1** - Anth parameter) indicating greater stress induced by RoundUp in combination with adjuvant and cosolvent than RoundUp alone (K2).

### Example 9 Maize field trial with the composition: terbuthylazine + metolachlor + mesotrione (Lumax 537.5 SE) / 2% vol. DMD / 2% vol. EtOH.

Field trials were conducted on experimental plots drawn from arable fields in the vicinity of Brzeźec near Pszczyna (podzolic soil, warm temperate transitional climate). Three variants of the experiment were carried out in which the maize *Zea mays* L.:
**K1-** was not sprayed (physiological state of plants **Table 1 lines 1 and 2** combined)
**K3** - was treated with Lumax at a concentration of 400 mg/L (plant physiological status **Table 1 line 5);**
**P2** - was treated with Lumax at a concentration of 400 mg/L along with 2% vol. DMD and 2% vol. EtOH (plant physiological status **Table 1 line 6).**

For spraying 1 m², 100 ml of spray liquid was prepared. A comparison of the physiological state of the plants is shown in **Table 1.** The application of the adjuvant in the presence of cosolvent increases the effectiveness of Lumax, as can be seen from the decrease in photosynthetic efficiency **(Table 1** - parameter A) by 9% compared to K3, transpiration also decreases by more than 36% **(Table 1** - ci parameter), with an increase in stomatal conductance for water by 5% **(Table 1** - gs parameter). The area over the chlorophyll a fluorescence induction curve **(Table 1** - A_{M}) also decreases by 13%, indicating a reduced pool of electron acceptors in PSII. There is also an increase of about 7 to about 13% in phase J and I **(Table 1 -** F3, F4parameters), indicating a disruption in the activity of the water-splitting complex. In P2, there was an increase of about 4% in flavonoids **(Table 1** - fla parameter) with a decrease of about 10% in anthocyanins **(Table** 1 - Anth parameter) indicating greater stress induced by Lumax 537.5 SE in combination with adjuvant and cosolvent than Lumax 537.5 SE alone (K3).

### Example 10 Maize field trial with composition: 0.5 g/L kristalon green / 4% vol. DMD 14% vol. AcMe.

Field trials were carried out on experimental plots drawn from arable fields in the vicinity of Brzeźec near Pszczyna (podzolic soil, warm temperate transitional climate). Three variants of the experiment were carried out, in which the maize *Zea mays* L.:
**K1** - was not sprayed (physiological condition of plants **Table 1 lines 1 and 2** combined);
**K4** - was treated with kristalon green fertiliser at a concentration of 0.5 g/L (plant physiological status **Table 1 row 8);**
**P3** - agro-treated with 0.5 g/L kristalon green together with 4% vol. DMD and 4% vol. AcMe (plant physiological status **Table 1 row 10).**

For spraying 1 m², 100 ml of spray liquid was prepared. A comparison of the physiological state of the plants is shown in **Table 1.** The application of adjuvant in the presence of cosolvent increases the effectiveness of the kristalon green fertiliser (at half the dose recommended by the manufacturer - the manufacturer recommends using 1 g/L). The area above the chlorophyll a fluorescence induction curve is increased by about 27% **(Table 1** - parameter A_{M}), indicating an increase in the pool of electron acceptors in PSII. The intercellular concentration of CO₂ **(Table 1 -** ci parameter) also decreases, indicating that it is consumed more rapidly by nearly 30%. There is a decrease in the number of auxiliary pigments (plant stress reduction) flavonoids by nearly 24% **(Table 1** - fla parameter) and anthocyanins **(Table 1** - Anth parameter) by about 8.5% with an increase in the amount of chlorophyll by more than 2% increasing photosynthetic efficiency **(Table 1** - chl parameter). There is also a decrease of nearly 9% in the NBI parameter indicating a better utilisation of nitrogen **(Table 1** - NBI parameter) in relation to K4, the control trial, where fertiliser alone was used for spraying without adjuvant and cosolvent.

### Example 11 Maize field trial with composition: 1 g/L kristalon green / 2% vol. DMD / 2% vol. AcMe.

Field trials were conducted on experimental plots drawn from arable fields in the vicinity of Brzeźec near Pszczyna (podzolic soil, warm temperate transitional climate). Three variants of the experiment were carried out in which the maize *Zea mays* L.:
**K1** - was not sprayed (physiological condition of plants **Table 1 lines 1 and 2** combined);
**K5** - was treated with kristalon green fertiliser at a concentration of 1 g/L (plant physiological status **Table 1 line 7);**
**P4** - agro-treated with kristalon green at a concentration of 1 g/L together with 2% vol. DMD and 2% vol. AcMe (plant physiological status **Table 1 line 9).**

For the spraying of 1 m², 100 ml of spray liquid was prepared. A comparison of the physiological state of the plants is shown in **Table 1.** The application of adjuvant in the presence of cosolvent increases the effectiveness of the kristalon green fertiliser (at the recommended dose by the manufacturer - 1g/L). The photosynthetic rate is clearly increased, by about 31% **(Table 1** - parameter A), stomatal conductance **(Table 1** - gs parameter) also increases by about 14% and transpiration by about 19% **(Table 1 -** parameter - E) compared to K5. In parallel, the intercellular CO₂ concentration **(Table 1** - ci parameter) decreases indicating its faster consumption by nearly 50%. There is a decrease in the number of flavonoids by about 3% **(Table 1** - fla parameter) and an increase in the amount of nitrogen by about 8% **(Table 1** - NBI parameter) indicating a higher metabolism in relation to K5, the control trial, where fertiliser alone was used for spraying without adjuvant or cosolvent.

### Example 12 Maize field trial with composition: 1 g/L kristalon green / 3% vol. TMD / 3% vol. AcMe.

Field trials were carried out on experimental plots drawn from arable fields in the vicinity of Brzeźec near Pszczyna (podzolic soil, warm temperate transitional climate). Three variants of the experiment were carried out in which the maize *Zea mays* L.:
**K1** - was not sprayed (physiological condition of plants **Table 1 lines 1 and 2** combined);
**K5** - was treated with kristalon green fertiliser at a concentration of 1 g/L (plant physiological status **Table 1 line 7);**
**P5** - agro-treated with kristalon green at a concentration of 1 g/L together with 3% vol. TMD and 3% vol. AcMe (plant physiological status **Table 1 line 13).**

For spraying 1 m², 100 ml of spray liquid was prepared. A comparison of the physiological state of the plants is shown in **Table 1.** The application of adjuvant in the presence of cosolvent increases the effectiveness of the kristalon green fertiliser (at the recommended dose by the manufacturer - 1 g/L). The photosynthesis rate increases by about 5.5% **(Table 1** - parameter A), and transpiration **(Table 1** - parameter E) increases by about 24% compared to K5. In parallel, the intercellular CO₂ concentration decreases by up to approximately 39% **(Table 1** - ci parameter) indicating its faster consumption. There is an increase in chlorophyll by more than 6% **(Table 1** - chl parameter) and in flavonoids by more than 8% **(Table 1** - fla parameter), with a decrease in anthocyanins by almost 14% **(Table 1** - Anth parameter) and an increase in nitrogen by as much as about 27% **(Table 1** - NBI parameter) indicating a higher metabolism in relation to K5, the control trial, where fertiliser alone was used for spraying without adjuvant and cosolvent.

### Example 13 Maize field trial with composition: 1 g/L kristalon green / 2% vol. DIOX / 2% vol. AcMe.

Field trials were conducted on experimental plots drawn from arable fields in the vicinity of Brzeźec near Pszczyna (podzolic soil, warm temperate transitional climate). Three variants of the experiment were carried out in which the maize *Zea mays* L.:
**K1** - was not sprayed (physiological condition of plants **Table 1 lines 1 and 2** combined);
**K5** - was treated with kristalon green fertiliser at a concentration of 1 g/L (plant physiological status **Table 1 line 7);**
**P6** - agro-treated kristalon green at a concentration of 1 g/L together with 2% vol. 1,3-dioxolane - DIOX and 2% vol. AcMe (plant physiological status **Table 1 line 14).**

For spraying 1 m², 100 ml of spray liquid was prepared. A comparison of the physiological state of the plants is shown in **Table 1.** The use of adj uvant in the presence of cosolvent increases the effectiveness of the kristalon green fertiliser (at the recommended dose by the manufacturer - 1 g/L). The time to reach the maximum fluorescence level **(Table 1** - parameter t for F_{M}) is reduced by almost 17% compared to K5, indicating a larger pool of unreduced plastoquinones. In parallel, the intercellular CO₂ concentration decreases by up to about 33% **(Table 1 -** ci parameter) indicative of its faster consumption. Chlorophyll increases by more than 6% **(Table 1** - chl parameter) and flavonoids by more than 27% **(Table 1 -** fla parameter) and anthocyanins by nearly 20% **(Table 1 -** Anth parameter). There is a decrease in the total amount of nitrogen by about 13% **(Table 1** - NBI parameter) indicating a higher metabolism in relation to K5, the control trial, where fertiliser alone was used for spraying without adjuvant or cosolvent.

### Example 14 Maize field trial with composition: 1 g/L kristalon green / 2% vol. DMD / in the presence of 2% vol. AcMe and without cosolvent.

Field trials were conducted on experimental plots drawn from arable fields in the vicinity of Brzeźec near Pszczyna (podzolic soil, warm temperate transitional climate). Three variants of the experiment were carried out in which the maize *Zea mays* L.:
**K1** - was not sprayed (physiological condition of plants **Table 1 lines 1 and 2** combined);
**K6** - was treated with agro-fertiliser kristalon green at a concentration of 1 g/L with 2% vol. DMD and 2% vol. AcMe (plant physiological status **Table 1 line 9);**
**P7** - agro-treated with kristalon green at a concentration of 1 g/L together with 2% vol. DMD without AcMe (plant physiological status **Table 1 line 15).**

For spraying 1 m², 100 ml of spray liquid was prepared. A comparison of the physiological state of the plants is shown in **Table 1.** The use of adjuvant without cosolvent is less effective in foliar fertilisation with kristalon green than the use of cosolvent in addition to adjuvant. In the presence of cosolvent, the photosynthesis rate is higher by more than 41% **(Table 1** - parameter A), transpiration **(Table 1 -** parameter E) is also higher by about 33% and by about 52%, stomatal conductance for water **(Table 1 -** gs parameter) compared to the trial without cosolvent (P7). The sample without the cosolvent also has a lower chlorophyll content **(Table 1** - chl parameter) by nearly 3%, while the number of other pigments increases: anthocyanins by nearly 6% **(Table 1** - Anth parameter), flavonoids by more than 12% **(Table 1** - fla parameter). The intercellular concentration of CO₂ is lower, by about 11% **(Table 1** - ci parameter), indicating its lower availability for photosynthesis.

### Example 15 Maize field trial with composition: 1 g/L kristalon yellow / 2% vol. DMD / in the presence of 2% vol. AcMe and without cosolvent.

Field trials were carried out on experimental plots drawn from arable fields in the vicinity of Brzeźec near Pszczyna (podzolic soil, warm temperate transitional climate). Three variants of the experiment were carried out, in which the maize *Zea mays* L.:
**K1** - was not sprayed (physiological condition of plants **Table 1 lines 1 and 2** combined);
**K7** - was treated with agro-fertiliser kristalon yellow at a concentration of 1 g/L together with 2% vol. DMD (plant physiological status **Table 1 line 17);**
**P7** - agro-treated with kristalon yellow at a concentration of 1 g/L together with 2% vol. DMD and 2% vol. AcMe (plant physiological status **Table 1 line 16).**

For spraying 1 m², 100 ml of spray liquid was prepared. A comparison of the physiological status of the plants is presented in relation to the control trial **K1** is shown in **Table 1.** Based on the physiological status of *Zea mays* L., it can be concluded that the presence of cosolvent reduces the levels of stress pigments: anthocyanins **(Table 1** - Anth parameter) by more than 22% and flavonoids **(Table 1 -** fla parameter). There is also a significant increase in the number of electron acceptors in PSII **(Table 1** - A_{M} parameter). There is an increase in the total amount of nitrogen of nearly 10% **(Table 1 -** NBI parameter) indicative of higher metabolism with respect to K7, the control trial, in which a fertiliser with adjuvant but without cosolvent was used for spraying.

### Example 16 Maize field trial with a combination of compositions: (I) glyphosate (RoundUp 360 Plus) / 2% vol. DMD / 2% vol. EtOH and (II) 1 g/L kristalon green / 2% vol. DMD / 2% vol. AcMe.

Field trials were carried out on experimental plots drawn from arable fields in the vicinity of Brzeźec near Pszczyna (podzolic soil, warm temperate transitional climate). Three variants of the experiment were carried out, in which the maize *Zea mays* L.:
**K1** - was not sprayed (physiological condition of plants **Table 1 lines 1 and 2** combined);
**K8** - treated with RoundUp 400 mg/L along with 2% vol. DMD and 2% vol. EtOH (plant physiological status **Table 1 line 4);**
**P8** - treated with RoundUp 400 mg/L along with 2% vol. DMD and 2% vol. EtOH, then after one week to improve the physiological status of the plants a treatment with kristalon green at a concentration of 1 g/L together with 2% vol. DMD and 2% vol. AcMe (plant physiological status **Table 1 line 11).**

For spraying 1 m², 100 ml of spray liquid was prepared. A comparison of the physiological status of plants for which a double agrotechnical treatment was applied (first spraying with herbicide, then after a week with fertiliser, both in combination with adjuvant and cosolvent) is shown in **Table 1.** Based on the physiological status of *Zea mays* L. it can be concluded that the presence of these two agrotechnical treatments reduces the concentration of pigments indicative of stress: anthocyanins **(Table 1 -** fla parameter) by more than 19%; anthocyanins **(Table 1 -** Anth parameter) by nearly 22%. There is an increase in total nitrogen by more than 53% **(Table 1** - NBI parameter) indicative of higher metabolism in relation to K1. Stomatal conductance decreases by 33% **(Table 1 -** parameter E) and stomatal conductance for water by more than 22% **(Table 1 -** gs parameter). There is a reduction in the time, by about 26%, to reach the chlorophyll a maximum fluorescence level **(Table 1 -** parameter t for F_{M}) indicating a larger pool of unreduced plastoquinones compared to control K8 plants.

### Example 17 Maize field trial with a combination of compositions: (I) terbuthylazine + metolachlor + mesotrione (Lumax 537.5 SE) / 2% vol. DMD / 2% vol. EtOH and (II) 1 g/L kristalon green / 2% vol. DMD / 2% vol. AcMe.

Field trials were carried out on experimental plots drawn from arable fields in the vicinity of Brzeźec near Pszczyna (podzolic soil, warm temperate transitional climate). Three variants of the experiment were carried out, in which the maize *Zea mays* L.:
**K1** - was not sprayed (physiological condition of plants **Table 1 lines 1 and 2** combined);
**K9** - treated with Lumax 537.5 SE 400 mg/L along with 2% vol. DMD and 2% vol. EtOH (plant physiological status **Table 1 line 5);**
**P9** - treated with Lumax 537.5 SE 400 mg/L along with 2% vol. DMD and 2% vol. EtOH, then after one week to improve the physiological status of the plants a treatment of kristalon green at a concentration of 1 g/L together with 2% vol. DMD and 2% vol. AcMe (plant physiological status **Table 1 line 12).**

For spraying 1 m², 100 ml of spray liquid was prepared. A comparison of the physiological state of plants for which a double agrotechnical treatment was applied (first spraying with herbicide, then after a week with fertiliser, both in combination with adjuvant and cosolvent) is shown in **Table 1.** Based on the physiological state of *Zea mays* L., it can be concluded that the presence of such two agrotechnical treatments reduces the concentration of pigments indicative of stress: anthocyanins **(Table 1** - fla parameter) by more than 3%; anthocyanins **(Table 1 -** Anth parameter) by nearly 9%. There is an increase in total nitrogen by more than 23% **(Table 1** - NBI parameter), as well as in the amount of chlorophyll **(Table 1** - chl parameter) indicating a higher metabolism in relation to K1. Stomatal conductance increases by more than 20% **(Table 1** - parameter E) and stomatal conductance for water **(Table 1** - gs parameter) by more than 25%, both parameters increasing with an increase in photosynthetic rate of nearly 23% **(Table 1** - parameter A). The time to reach the chlorophyll a maximum fluorescence level is reduced by nearly 70% **(Table 1** - parameter t for F_{M}) indicating a larger pool of unreduced plastoquinones compared to control K9 plants.

### Example 18

### Greenhouse trial with foliar fertilisation of barley with composition: 3 g/L grain 18 plus micro / 1% vol. DIOX or TMD or DMD or DDM / no cosolvent.

### Control Sample Solution:

**K** - aqueous solution of foliar fertiliser 3 g/L

### Reference Sample Solution:

**R** - aqueous solution of foliar fertilizer 3 g/L with the addition of 1 %vol. DGDE;

### Tested compositions according to the invention:

**A** - aqueous solution of foliar fertilizer 3 g/L with the addition of 1 %vol. DIOX;
**B** - aqueous solution of foliar fertilizer 3 g/L with the addition of 1 %vol. TMD;
**C** - aqueous solution of foliar fertilizer 3 g/L with the addition of 1 %vol. DMD;
**D** - aqueous solution of foliar fertilizer 3 g/L with the addition of 1 %vol. DDM;

Grains of two varieties of barley (*Hordeum vulgare*): RT Planet and Tilmor were sown in pots (13x13x15 cm), filled with horticultural soil. The pots were placed in the greenhouse for the entire duration of barley growth, in order to ensure constant and optimal growth conditions: air temperature 20°C; photoperiod 16/8; light intensity 900 µmol m⁻² s⁻¹. Cereals 18 plus micro was used as foliar fertiliser in the experiment. The fertiliser was dissolved in water (3 g/L) together with the adjuvants indicated in points **K, R, A-D** to obtain the respective working compositions. Each composition was prepared on the day of spraying. Two sprays were carried out: on day 21 and 75 after sowing barley. On day 21, 5 ml of the mixture was used and on day 75, 10 ml of the mixture from all the compositions tested was used on each individual plant.

After 120 days of growth, barley reached full maturity and it was possible to carry out analyses including the determination of: the number of stalks of each plant; the number of grains harvested per plant; the weight of grains harvested per plant; the weight of one thousand grains calculated on the basis of the average results of the weight of grains harvested from individual plants. The results are summarised in **Fig. 3****.** Compared with the trial control **K**, the application of composition **B** with adjuvant constituting TMD allowed to obtain significantly statistically higher yields for both tested barley cultivars, using the same concentration of fertiliser. Accordingly, RT Planet cultivar yielded 13.6% higher grain number and 20.6% higher grain weight, while Tilmor cultivar yielded 24.7% higher grain number and 33.5% higher grain weight. Compared to the trial reference **R** (the adjuvant described in the literature being DGDE), the use of composition **B** with the adjuvant being TMD resulted in 10.6% higher grain number and 8.2% higher grain weight for the RT Planet cultivar, while the Tilmor cultivar achieved 5.2% higher grain number and 19.5% higher grain weight.

### Example 19 Field trial at an independent research station for foliar fertilisation of barley with the composition: 10 g/L Grain Plus with MgSO₄ / 0.75% vol. DIOX or TMD or DMD or DDM / 0.25% AcMe.

In the 2023 season, a field experiment was established at the independent Nagradowice Plant Cultivation Station belonging to Poznańska Hodowli Roślin Sp. z o.o. in order to evaluate the effect of different variants of foliar fertilisation on the yield and other yield structure traits of the spring barley cultivar Virtuoz (brown soil, temperate warm transitional climate). The experiment, with a total of 8 sites, was set up in 2 replicates, at 1 location on 10 m² plots. During the growing season, basic treatments were applied with plant protection products - the APs (herbicides and insecticides). No fungicide treatment was carried out. The experiments were conducted in a forage technology. At the flag leaf stage (BBCH 39), a foliar fertilisation treatment was carried out with a fertiliser concentration of 10 g/L (1 kg of fertiliser per 100 L of water) in the following four variants:
Variant K (trial control): Cereal Plus (3 kg/ha) with MgSO₄ (5 kg/ha);
Variant A: Cereal Plus (3 kg/ha) with MgSO₄ (5 kg/ha) with 0.75 %vol. DMD and 0.25 %vol. AcMe;
Variant B: Cereal Plus (3 kg/ha) with MgSO₄ (5 kg/ha) with 0.75 %vol. TMD and 0.25 %vol. AcMe;
Variant C: Cereal Plus (3 kg/ha) with MgSO₄ (5 kg/ha) with 0.75 %vol. DDM and 0.25 %vol. AcMe.

As foliar fertiliser at a total concentration of 10 g/L in the experiment, preparations of Cereals Plus with MgSO₄. Sowing was carried out on 03.04.2023, foliar fertilisation treatment on 31.05.2023, harvesting on 14.08.2023. During the growing season the following were assessed: plant height (cm), number of plants per 1 m², number of ears per 1 m². After harvest, the following were assessed: grain moisture content (%), weight - yield per plot (kg), and thousand grain weight (MTZ).

Based on the analysis of the results of the field experiment established in the 2023 season with the cultivar Virtuoz using four variants of foliar fertilisation, it was found that with fertilisation variant A (Cereal Plus (3kg/ha) with MgSO₄ (5 kg/ha) with 0.75%vol. DMD and 0.25% AcMe) achieved the highest yield (105.1% of the reference variety relative to the control trial (K)) **(****Fig. 4****).** The yield with Variant B and Variant C was similar to the control (K) trial.

### Example 20 Greenhouse trial for northern white-cedar with composition: 1 g/L kristalon yellow or 1 g/L kristalon green / 1% vol. DMD / 1.0% vol. AcMe

Under greenhouse conditions, rooted northern white-cedar cuttings approximately 10 cm high were subjected to the following agrotechnical treatments twice a week for 8.5 weeks (60 days):
**K** - spraying with a composition containing 1 g/L kristalon yellow or 1 g/L kristalon green in a volume of 5 ml per treatment each was applied once a week,
**P** - spraying with a composition containing 1 g/L kristalon yellow or 1 g/L kristalon green with 1% vol. DMD and 1% vol. acetone in a volume of 5 ml per treatment, each fertiliser applied once a week.

The application of the composition containing adjuvant and cosolvent increases all the evaluated growth parameters of the northern white-cedar. After 60 days from the first spraying, the northern white-cedars are characterised by greater growth, in height by more than 79% (1.6 cm), in width by more than 48% (1.2 cm) and in area by nearly 70% (4.2 cm²) compared to the control (K). Taking into account the initial size of the northern white-cedar, the relative increments (depending on the initial dimensions of the plants) are significantly greater and are as follows: height - an increase of nearly 16% of the initial height (better than the control trial by nearly 86%), width - an increase of nearly 5.5% of the initial width (better than the control trial by nearly 55%), an increase of more than 17.7% of the area in relation to the area value at the beginning of the experiment (better than the control trial by more than 90%).

### Example 21 Greenhouse trial for northern white-cedarwith composition: 7.94 g/L Hoagland / 1.0% vol. DIOX : DMD : TMD (1:1:1) / 1.0% vol. AcMe

Under greenhouse conditions, rooted northern white-cedar cuttings approximately 10 cm high were subjected to the following agrotechnical treatments twice a week for 8.5 weeks (60 days):
**K** - spraying Hoagland's medium (0.0397 g / 5 ml) in a volume of 5 mL per treatment;
**P** - spraying with a composition containing Hoagland's medium (0.0397 g / 5 ml) with the addition of 1%vol. DIOX : DMD : TMD (in a molar ratio of 1:1:1 respectively) and 1% vol. AcMe in a volume of 5 ml per treatment.

After two months of cultivation in the greenhouse, the absolute growth: area, height and width of the plants were evaluated, as well as the same parameters in relation to the initial size of the northern white-cedars (relative measurement). Plants from the control trial (K) over the 60 days of the experiment had an average growth of 1.3 cm in width, 1.6 cm in height and an average increase in area of 9.1 cm². Compared to plants from the control trial, northern white-cedars treated with adjuvant and cosolvent (P) had a greater height increment of over 6% (1.7 cm) and an area increment of almost 5% (9.6 cm), with a reduced width increment of 0.3 cm (1.0 cm). Converting the growth magnitude values into relative values (depending on the initial plant dimensions), northern white-cedars sprayed with Hoagland's nutrient solution with adjuvant and cosolvent increased their height by 18% compared to the initial height and this value is more than 28% better than the growth in the control trial. Area grew by 6% of the initial area, more than 17% more than the control trial, while width grew at a slower rate of 35% relative to the control trial, i.e. it increased its initial value by 12.5%, while the control trial grew by 18.5% in width. This is a natural behaviour for a plant that, at an accelerated rate, first grows more intensively in height and then becomes bushier as it grows in width.

The compositions according to the invention can find application in improving the transport of biologically active substances (metal chelates and/or NPK compound fertilisers) through the surfaces of the aboveground parts of plant organs. Improving the performance of commercially used artificial fertilisers, by improving the effectiveness of the biologically active substances contained in them, reduces their harmful effects on the environment. Depending on the variant of the composition, the use of the composition according to the invention makes it possible to reduce the amount of applied artificial fertilizer respectively:
for barley cultivation, between 2% and 15% (depending on variety and growth conditions);
in the case of maize cultivation, between 20% and 50%;

The aforementioned values result from a comparison of plant growth levels in relation to control trials. At the same time, in the case of northern white-cedar cultivation, the use of adjuvants with cosolvents in comparison with relative growth (depending on the initial plant dimensions) allows an increase in plant height from 28% to 86%, an increase in plant width from 12.5% to 55%, an increase in plant area from 17% to 90%.

The main field of application of the invention is plant cultivation and protection.

The composition according to the invention can find use primarily in fertilisation and maintenance treatments of both cereal and ornamental plants:
- ornamental plants of the cypress family, especially favoured: northern white-cedar (*Thuja occidentalis*), and/or
- Cereal plants of the Poaceae family, especially favourably: maize (*Zea mays)* L. cv. Cosmo 230 or barley (*Hordeum vulgare*): RT Planet, Tilmor or Virtuoso.

In addition, the compositions according to the invention may find use in improving the transport of the biologically active substance (glyphosate or terbuthylazine and/or metolachlor and/or mesotrione) through the surfaces of aboveground parts of plant organs. Improving the performance of commercially used herbicides, by improving the effectiveness of the biologically active substances they contain, reduces their harmful effects on the environment. Depending on the variant of the composition, the use of the compositions according to the invention allows a reduction in the amount of herbicide applied from 15% to 48.3%, as can be seen from a comparison of the level of weed mortality in relation to control trials. Furthermore, the compositions according to the invention can be used in increasing the effectiveness of herbicides on weeds resistant to the standard doses recommended by the manufacturer or in the control of invasive plants. The main field of application of the invention is plant breeding and protection.

The composition according to the invention may find use primarily in combating:
- weeds of the Poaceae family, particularly preferably of the hairy crabgrass and/or couch grass and/or cockspur grass and/or bushgrass, and/or
- weeds of amaranth family, particularly preferably of white goosefoot, and/or
- weeds of Asteraceae family, particularly preferably of sea mayweed or European goldenrod, and/or
- weeds of the nightshade family, particularly favourable to black nightshade.

## Claims

1. A composition of adjuvants and cosolvents for improving penetration of artificial fertilisers and/or herbicides through surfaces of aboveground parts of plant organs, **characterised in that** it comprises an aqueous solution of a mixture of one to three adjuvants with a cosolvent and an artificial fertiliser and/or herbicide, wherein:
- the adjuvant is a low-molecular-weight cyclic ketal with a 1,3-dioxolane leading structure of general formula 1, wherein individual substituents R¹, R², R³, R⁴ denote independently a hydrogen atom (-H) or a hydroxymethyl group (-CH₂ OH) or an alkyl group (C₁-C₁₃),
- the artificial fertiliser is a NPK compound fertiliser composed of:
(N-NO₃ - 2.5%, N-NH₄ - 2.5%, N-NH₂ - 13.0%) - (N) - 18%; (MgO) - 3.5%; (S) - 2.7%; (B) - 0.2%; (MgO) - 3.5%; (Cu) - 1.5%; (Fe) - 0.5%; (Mn) - 3.0%; (Mo) - 0.01%; (Zn) - 0.5% enriched with MgSO₄ as: (MgO) - 16%; (SO₃) - 32.5%;
or a fertiliser with metal chelates composed of:
(N-NO₃ - 4.9%, N-NO₄ - 3.3%, N - 9.8%) - (N) - 18%; (P₂O₅) - 18%; (K₂O) - 18%; (MgO) - 3%; (SO₃) - 5%; (B) - 0.025%; (Fe) EDTA/DTPA - 0.7%; (Mn) EDTA - 0.04% (Zn) EDTA - 0.025%; (Cu) - 0.01%; (Mo) - 0.004%;
or:
(4.4% N-NO₃; 8.6% N-NH₄) - (N) - 13%; (P₂O₅) - 40%; (K₂O) - 13%; (Fe) EDTA/DTPA - 0.07%; (Mn) EDTA - 0.04%; (Zn) EDTA - 0.025%; (Cu) EDTA - 0.01%; (B) - 0.025%; (Mo) - 0.004%;
or:
N-NO₃ - 5%, N-NH₄ - 3.5%, N-NH₂ - 9.5%) - (N) - 18%; (P₂O₅) - 18%; (K₂O) - 18%; (MgO) - 2%; (SO₃) - 6%; (B) - 0.02%; (Cu) EDTA - 0.05%; (Fe) EDTA - 0.05%; (Mn) EDTA - 0.01%; (Mo) - 0.001%; (Zn) EDTA - 0.03%;
or:
(101.1 g/L KNO₃) - 6.0 mL; (236.16 g/L Ca(NO₃)₂ •4H₂O) - 4.0 mL; (115.08 g/L NH₄H₂PO₄) - 2.0 mL; (246.49 g/L MgSO₄ •7H₂O) - 1.0 mL; (1.864 g/L KCl) - 2.0 mL; (0.773 g/L H₃BO₃) - 2.0 mL; (0.169 g/L MnSO₄ •H₂O) - 2.0 mL; (0.288 g/L ZnSO₄ •7H₂O) - 2.0 mL; (0.062 g/L CuSO₄ •5H₂O) - 2.0 mL; (0.04 g/L H₂ MoO₄ •H₂O) - 2.0 mL; (30.0 g/L NaFeDTPA) - 1.0 mL;
- herbicide is:
glyphosate (2-(phosphonomethylamino)acetic acid)
or
terbuthylazine (2-*N*-tert-butyl-6-chloro-4-*N*-ethyl-1,3,5-triazine-2,4-diamine) and/or metolachlor (2-chloro-*N*-(2-ethyl-6-methylphenyl)-*N*-[(1*S*)-2-methoxy-1-methylethyl]acetamide) and/or mesotrione (2-(4-(methylolsulfonyl)-2-nitrobenzoyl)cyclohexane-1,3-dione)
- concentration of the adjuvant content ranges from 0.75 to 4.0 %vol. relative to the total volume of the composition, preferably up to 2.0 %vol,
- concentration of the cosolvent content ranges from 0.25 to 4.0 % vol. relative to the total volume of the composition, preferably up to 2.0 % vol,
- concentration of the glyphosate content is up to 400 mg/L in relation to the total volume of the composition, preferably between 200 and 400 mg/L,
- concentration of the terbuthylazine content is between 92.4 and 250 g/L in relation to the total volume of the composition, preferably between 100 and 250 g/L,
- concentration of the metolachlor content is up to 154 g/L in relation to the total volume of the composition, preferably between 100 and 154 g/L,
- concentration of the mesotrione content is between 18.5 and 50 g/L in relation to the total volume of the composition, preferably between 20 and 50 g/L,
- concentration of the NPK fertiliser content, relative to the total volume of the composition, is between 3.0 and 10.0 g/L,
- concentration of the fertiliser with metal chelates ranges from 0.5 to 1.0 g/L in relation to the total volume of the composition.

2. The composition according to claim 1, **characterised in that** the alkyl group is a methyl group (-CH₃).

3. The composition according to claim 1, **characterised in that** the cosolvent is acetone (propan-2-one) or ethyl alcohol (ethanol).

4. The composition according to claim 1, **characterised in that** it is used for the cultivation of plants, preferably monocotyledons.

5. The composition according to claim 4, **characterised in that** it is used for cultivation of cereal plants of Poaceae family: maize (*Zea mays)* or barley (*Hordeum vulgare*)*.*

6. Composition according to claim 4, **characterised in that** it is used in the cultivation of ornamental plants of cypress family: northern white-cedar (*Thuja occidentalis).*

7. The composition according to claim 1, **characterised in that** it is used for the control of weeds, preferably monocotyledons.

8. The composition according to claim 7, **characterised in that** it is used for the control of weeds of the Poaceae family, preferably selected from the group of hairy crabgrass, couch grass, cockspur grass, bushgrass.

9. The composition according to claim 1, **characterised in that** it is used for the control of weeds, preferably dicotyledons.

10. The composition according to claim 9, **characterised in that** it is for use in the control of weeds of amaranth family, preferably white goosefoot.

11. The composition according to claim 9, **characterised in that** it is used for the control of weeds of Asteraceae family, preferably selected from the group comprising sea mayweed, European goldenrod.

12. The composition according to claim 9, **characterised in that** it is used for the control of weeds of nightshade family, preferably black nightshade.
